# EUROPEAN PATENT APPLICATION

(11) **EP 2 186 671 A1**
(43) Date of publication of application: **19.05.2010**
(21) Application number: 08168921.8
(22) Date of filing: 12.11.2008
(51) Int. Cl.: B60N 2/22, B60N 2/427, B60N 2/68

(54) **Composite seat structure**

(71) Applicant: Eelcee SA, 1015 Lausanne (CH)
(72) Inventor: Jonsson, Tony, 1630 Bulle (CH); Hancock, Steven, 1296 Coppet (CH)
(74) Representative: Ganguillet, Cyril

(57) **Abstract**

According to an embodiment of the present invention, the vehicle seat frame structure comprises a back frame structure (20), pivotally connected via a hinge mechanism (13) to a seat chassis structure (21). Each of the back frame structure (20) and the seat chassis structure (21) has two lateral longitudinal frame elements (4, 5; 26, 27), respectively connected by two connecting elements (6, 7.1; 7.2, 8). The longitudinal frame elements are made at least in part of a polymer material and have a substantially I-shaped cross-section along at least a substantial part of their length.

## Description

### Technical Field

The present invention relates to a reinforced polymer seat structure and in particular a vehicle seat frame structure.

### Prior Art and the Problem Underlying the Invention

Reduction of vehicle weight is an important method of reducing fuel consumption and hence the CO₂ emissions from passenger vehicles. Since there are usually multiple seats in a passenger vehicle they are a candidate for effective weight reduction. However, seats are often critical safety items within a vehicle and hence have to withstand not only the loading occurring during use of the vehicle but also the substantially more severe loading applied during a crash event. In an automotive vehicle, for example, the seat frame is a vital part of the passive safety system contributing to how the passenger is supported during the crash event. Robustness is of key importance as it is imperative that interior components do not show any sharp edges or become harmful in any way to the occupants of a vehicle even during a crash event. Further to this, it is essential that the structure has a load carrying capacity under large deformation. Typically structures formed from steel sheet materials tend to buckle under large deformation and therefore do not show robust behaviour.

The vast majority of seat structures for vehicles are produced either from extruded steel sections which are bent and welded together or from stamped steel sheets which are spot welded together. The main driver for the use of metals is their relatively low raw material cost, their predictable performance and the extensive experience available on how to best use these materials to manufacturing parts.

US 2008/0038569 discloses a composite component as a seat back for a vehicle. The seat back comprises a support portion and a reinforcing composite layer. According to this teaching, the reinforcement layer is applied to the part of the back seat that has to resist to forces acting horizontally in the front to rear direction of the seat back. In order to achieve sufficient stability to withstand such forces, the reinforcing layer is U-shaped and covers a large surface of the support portion. Accordingly, the utilisation of the reinforcement material is not optimised and a lot of such material has to be used.

In view of the above, it is an objective of the present invention to provide a light seat frame structure for a vehicle seat that is sufficiently resistive and stable with respect to severe loading applied during a crash event.

In particular, it is an objective to provide a seat frame on the basis of polymers that is resistive and stable with respect to horizontal loads from impacts onto the back of the seat.

It is a further objective to optimise the use of reinforcing materials in a seat frame structure in order to minimize weight and cost of the seat frame structure, while still providing a structure fulfilling the requirements on robustness.

### Summary of Invention

The inventors of the present invention provide a reinforced polymer seat structure or part thereof which is optimised both in geometry and in the configuration of materials to be low cost, light weight and have enhanced safety performance.

Accordingly, in an aspect, the present invention provides a seat frame structure comprising at least two lateral, left and right longitudinal frame elements extending at least partly along the back and/or the seat of a seat comprising said seat frame structure, wherein said left and right longitudinal frame elements are made at least in part of a polymer material.

According to a further aspect, the present invention concerns a back frame structure for a seat, said back frame structure comprising at least two lateral, left and right longitudinal frame elements extending at least partly along the back, wherein said left and right longitudinal frame elements are made at least in part of a polymer material.

According to a further aspect, the present invention concerns a seat chassis frame structure for a seat, said seat chassis frame structure comprising at least two lateral, left and right longitudinal frame elements extending at least partly along the seat chassis, wherein said left and right longitudinal frame elements are made at least in part of a polymer material.

The present invention more particularly relates to a vehicle seat structure according to the appended claims.

According to a preferred embodiment, thermoplastic and/or thermosetting polymer material are used.

According to a preferred embodiment, polymer materials of structural elements of the seat frame structure of the present invention are made by compression moulding and/or injection moulding.

According to a preferred embodiment, polymer materials of structural elements such as the lateral, left and right longitudinal frame elements, connecting structures and/or reinforcement elements comprise or are constituted of one or more fibre reinforced composite material.

According to a preferred embodiment, the left and right longitudinal frame elements have an I-shaped cross-section at least at one position along their longitudinal extension.

According to a preferred embodiment, the left and right lateral frame elements comprise locally applied reinforcements.

According to a preferred embodiment, the connection between the left and right lateral frame elements and the transverse connecting elements is reinforced with locally applied reinforcements.

In the drawings,
**Figure 1** shows an embodiment of the seat frame structure of the present invention.
**Figure 2** is a cross-section of an embodiment of a longitudinal element of the structure of Figure 1.
**Figure 3** shows another embodiment of the seat frame structure of the present invention, comprising an embodiment of a back frame structure and of a seat chassis frame structure according to the invention.
**Figure 4** shows an embodiment of a back frame structure of the invention, provided as a single piece polymer material with local reinforcements.
**Figure 5** shows a detail view of the back frame structure of Figure 3.
**Figures 6-8** show a top end of further embodiment of a back frame structure, comprising a connecting structure comprising two telescopically connected polymer profiles.
**Figure 9** shows the two telescopically polymer profiles of the back frame structure of Figure 8 separated from each other.
**Figure 10** shows the bottom end of an embodiment of a back frame structure of the invention.
**Figure 11** shows in greater detail the bottom end of a lateral longitudinal side frame element of the back frame structure of the present invention.
**Figure 12** shows in greater detail the hinge mechanism of the embodiment of Figure 1.
**Figure 13** shows an embodiment of the present invention, in which a longitudinal frame element has at least in part an U-shaped cross-section, said U-shaped cross-section merging to an I-shaped cross-section towards a transversal connecting element in the area where a hinge mechanism is attached.
**Figure 14** shows a view in cross-section through line I-I of the longitudinal frame element shown in Figure 13, showing the transition between a U-shaped and an I-shaped cross section.

### Detailed Description of the Preferred Embodiments

The device of the present invention is now illustrated by way of example with reference to the appended drawing figures.

For the purpose of the present specification, indications of place and direction, such as bottom and top, lateral and central, left and right, proximal and distal, front and rear and so forth refer to positions and directions as perceived by a user sitting in a chair comprising the frame structures as disclosed herein.

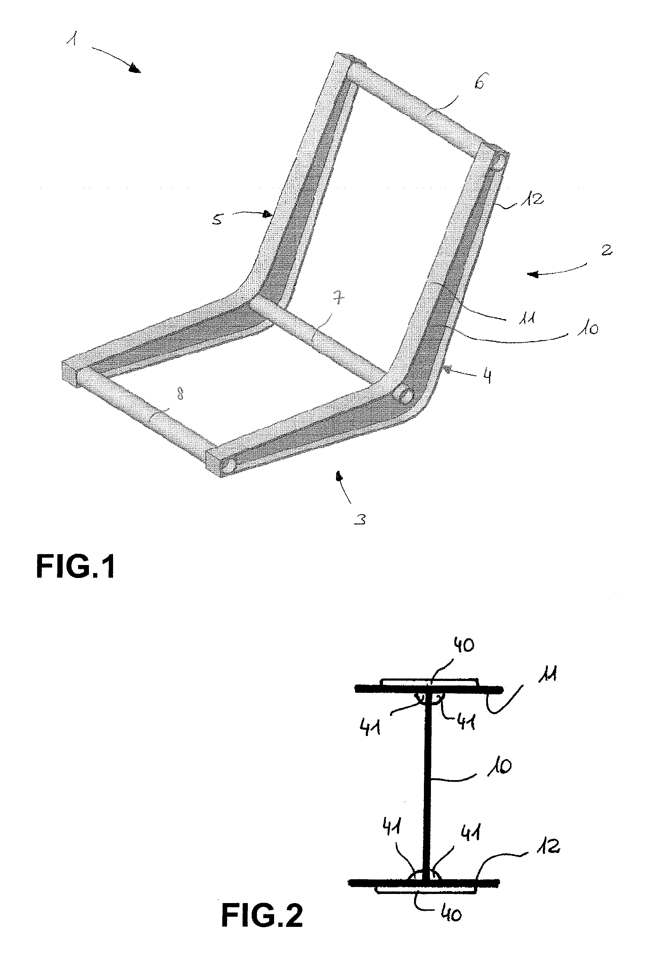

The embodiment of a seat frame structure 1 of the present invention for a seat comprising a back portion 2 and a seat portion 3 shown in Figure 1 comprises two lateral, left and right longitudinal frame elements 4, 5. The longitudinal frame elements are arranged substantially in parallel and linked to each other by three connecting elements 6-8.

In general, the longitudinal frame elements are the primary load bearing structures. The connecting elements are arranged substantially horizontally and extend from the left to the right in a direction which is substantially perpendicular to the rear-to-front direction. One function of the connecting elements is to distribute loads between the side elements.

In the embodiment shown in Figure 1, the lateral longitudinal frame elements 4, 5 and the connecting elements 6, 7, 8 are originally separate structures which are assembled. In an embodiment of the invention, and in particular in the embodiment of a back frame structure for a seat, it is possible that the longitudinal frame elements and at least one connecting element are formed from a single piece, or that the longitudinal frame element and part of a connecting element are made of a single piece.

The longitudinal frame elements 4, 5 have a geometrical configuration that optimises load bearing with respect to loads impacting in front to rear direction, or vice-versa, upon the seat frame. The geometrical configuration is revealed when considering a cross-section through one of the longitudinal frame elements 4, 5 at a position preferably lying in the lower portion between the rear lower connecting element 7 and the top connecting element 6 of the back frame structure. The cross section preferably is symmetric and preferably has an I-like configuration. More generally, a longitudinal frame element 4, 5, comprises a central flat web 10. The central flat web is preferably oriented in a way that its two opposing sides face towards lateral, that is, towards the left and right sides, respectively. In this way, the I-like configuration of the longitudinal frames provide most resistance to impacts from behind or from the front. Each longitudinal frame element thus comprises proximal and distal flat flanges 11, 12 (flanges fore and aft), which, in the embodiments shown, are arranged along the border of the central flat web 10. The flat surfaces of the proximal and distal flanges 11, 12, in the case of the back frame structure, face towards the front and the back, and in case of the seat chassis frame structure towards the top and the bottom. In other words, the proximal and distal flanges 11 and 12 are attached substantially perpendicularly to the central flat web 10. They preferably have about the same largeness (left-to-right extension) at a given position along their longitudinal extension. Since the entire longitudinal frame elements 4, 5 preferably have a symmetrical cross-section, this means that the proximal and distal flanges 11, 12 are connected along their longitudinal axis of symmetry to end portions of the central flat web 10. The connecting elements 6-8, in the embodiment shown in Figure 1, are not originating from a single piece with the longitudinal frame elements 4, 5, but are preferably obtained by a separate injection moulding or compression moulding step and are attached in a subsequent step to the longitudinal frame elements 4, 5. It can be seen that the connecting elements 6-8 are attached on or within the central web 10, which optimises the load redistributing function of the connection structures 6-8.

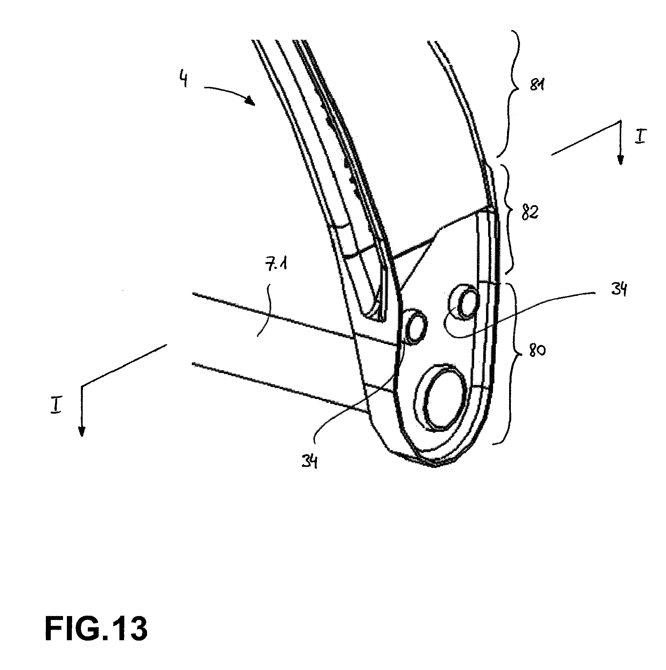

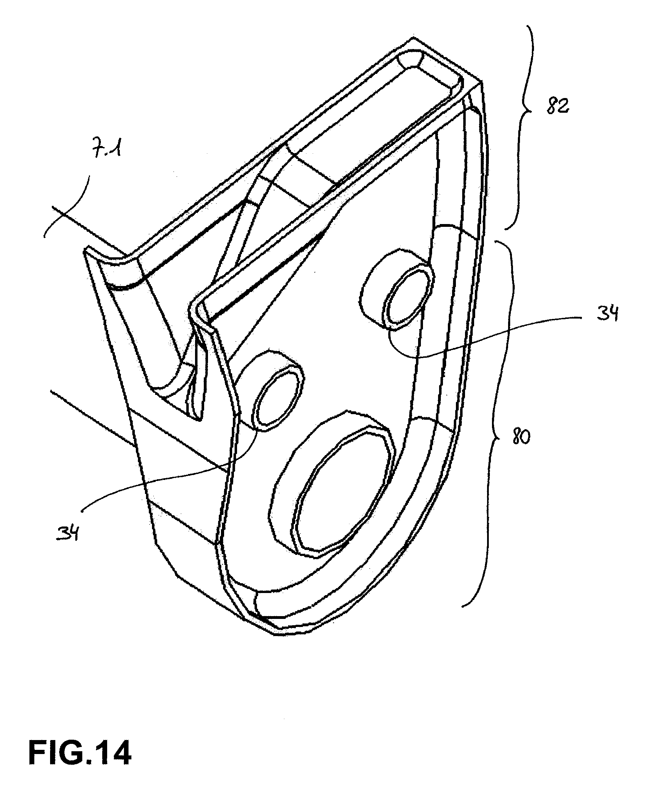

**Figure 2** shows a cross section through an exemplary longitudinal frame element. The perpendicularly arranged central and proximal distal flanges 10-12 can be seen. Furthermore, reinforcing elements 40 and 41 are applied locally in order to improve the frame's robustness. The I-like cross-section obtained by the central web 10 and the proximal and distal flanges 11, 12 can be seen in Figure 1. Preferably, a substantial portion along the longitudinal frame elements has an I-shaped cross-section. According to different embodiments, at least half the length, at least 80% or 100% of the length of a longitudinal frame element is characterised by an I-shaped cross-section as described above. According to a variant represented in Figures 13 and 14 further discussed below, the end portions of the longitudinal frame elements have an I-shaped cross-sections, whereas other portions may or may not have and I-shaped cross-section.

The longitudinal frame elements are, for example, frame elements 4 and 5 in Figure 1, but also corresponding longitudinal frame elements shown in subsequent figures, including those indicated with reference numbers 26, 27, 54, 55, for example.

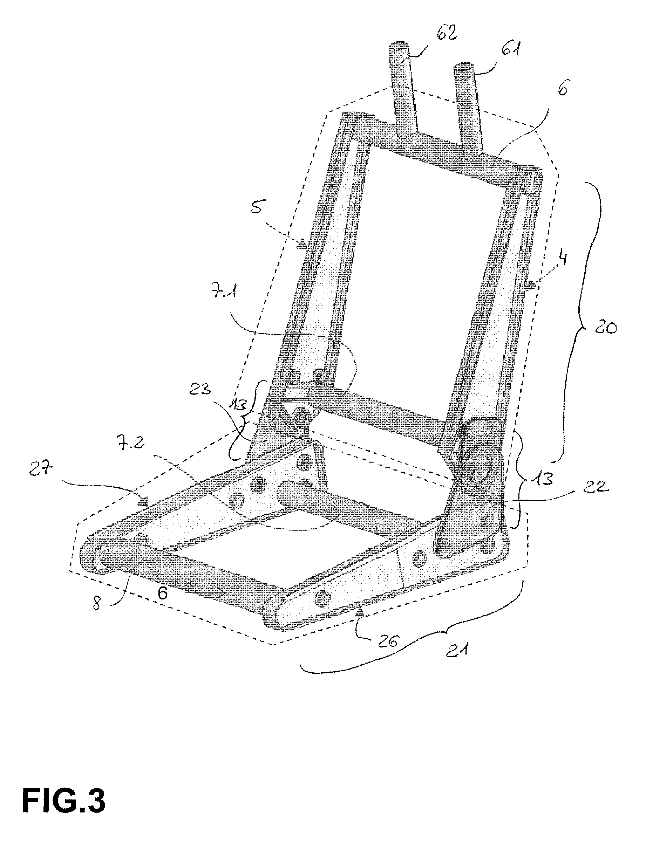

**Figure 3** shows an embodiment of the seat with a reclinable seat back. Accordingly, a back frame structure 20 is pivotally connected via a hinge mechanism 13 to a seat chassis structure 21. Each of the back frame structure 20 and the seat chassis structure 21 has two lateral longitudinal frame elements 4, 5 and 26, 27, respectively, which are connected by two connecting elements 6, 7.1 and 7.2, 8, respectively. It is noted that the longitudinal frame elements 4, 5 and 26, 27, respectively, have an overall shape reminding of a triangle. They are larger towards the lower, rear part of the seat and become thinner towards the front or the top of the seat frame structure. This is reflected by the broadness of the central flat structure indicated with reference numeral 10 in Figure 1, which is at a maximum toward said the lower, rear end of the seat. At this position, the seat frame requires increased robustness. Towards the top and respectively front ends of the lateral longitudinal frame elements, 4, 5 and 26, 27, respectively, less stability is required and the overall structure can be thinner. The same applies to embodiments shown in other figures.

In Figure 3, at the rear part of the seat chassis structure 21 corresponding with the bottom of the back frame structure 20, there is a hinge mechanism 13, which pivotally connects both parts of the seat frame 1 together. The hinge mechanism comprises, on each side, a support plate 22, rigidly attached, for example by way of screws or nuts, to the seat chassis 21, and more particular to the central flat structure of the longitudinal frame element 26, and a pivoting plate 24, which is rigidly attached, for example by way of screws or nuts, to the back frame structure 20. The axis of pivoting on one side is supported and reinforced by said support plate 22, said pivoting plate 24 and the longitudinal frame element 4 or 5. The plates 22 and 24 thus function as reinforcement structures for enabling pivoting of the back frame structure. The hinge mechanism will be described in further detail below.

In Figure 3, the top connecting element 6, provided at the upper end of the back frame structure 20 carries headrest carrying elements 61 and 62.

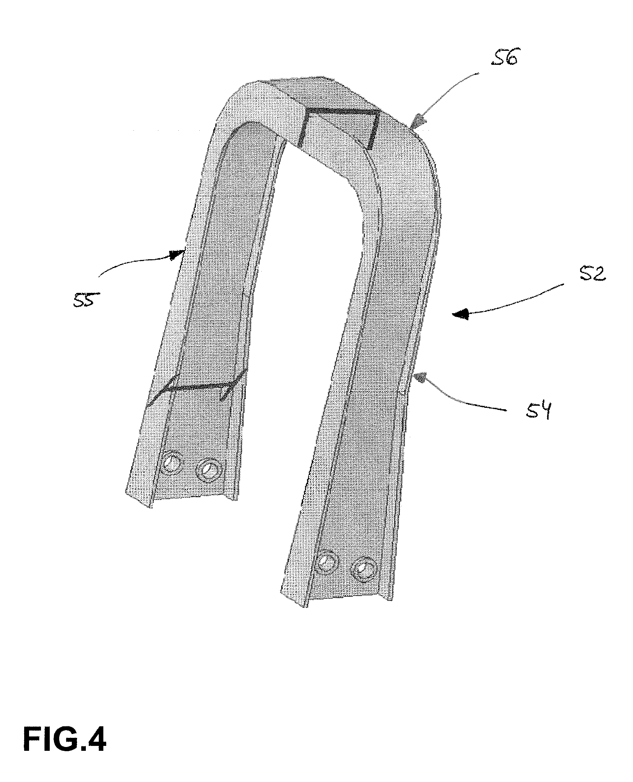

**Figure 4** shows a further embodiment of a back frame structure 52, which is prepared as a single piece. In particular, the back frame structure 52 comprises lateral longitudinal elements 54 and 55 extending in parallel and having an I-shaped cross section, as indicated, wherein said lateral longitudinal elements at their top ends, converge and form a connecting structure 56. The connecting structure 56 has an U-shaped cross section, as indicated in Figure 4. Accordingly, at the top end of each left and right longitudinal frame element 54, 55, the geometrical configuration passes gradually from said I-shaped to said U-shaped cross-section. At the bottom of the back frame structure 52, there are provided housings on each lateral longitudinal frame element 54, 55, or similar structures suitable for attaching a hinge mechanism, similar to the hinge mechanism 13 described above, for example.

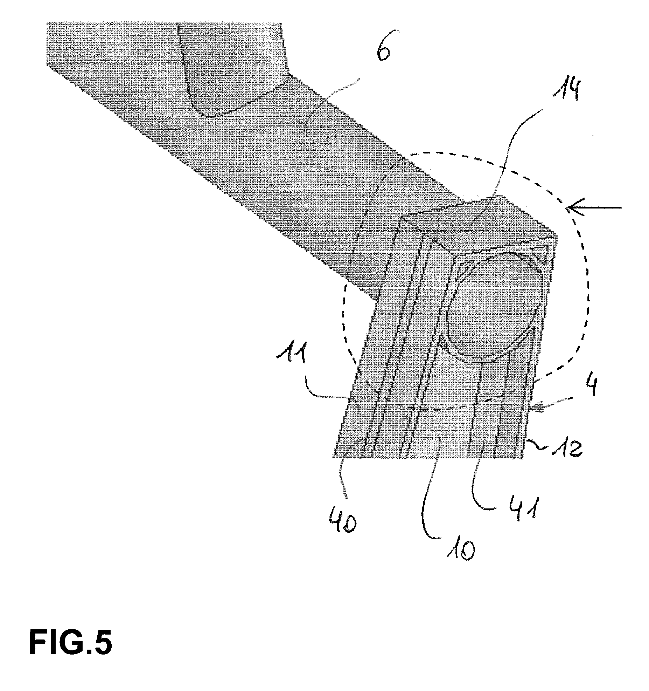

**Figure 5** shows in greater detail the upper end of the left longitudinal frame element 4 of Figure 3, and in particular the connection between the top connecting structure 6 to the longitudinal frame element 4. It can be seen that the connection structure 6 is guided across the central flat structure 10 and stabilised further by the proximal and distal flanges 11 and 12 and by a top flat part 14, which surround the tubular connection structure 6. Reinforcement elements 40 and 41 are provided at specific locations for increasing the robustness of the frame structure made principally from polymers.

In particular, the elements 4, 6, 10-12 and 14 are preferably made from polymer as defined herein, for example fibre reinforced polymer. The reinforcement elements may also be made of fibre reinforced polymer, for example, but they may also be made of other materials providing robustness. Since the reinforcing elements only concern a comparatively small proportion or volume of the overall frame structure, they may also be made of materials that are heavier than polymers, without substantially increasing the weight of the entire seat frame structure.

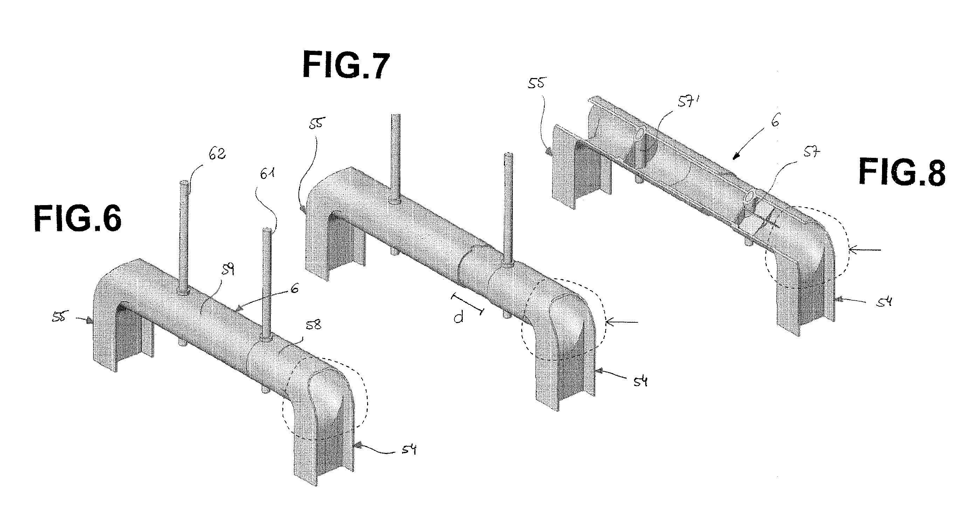

**Figures 6-8** show an embodiment of a geometrical configuration of the top portion of a seat frame structure, in particular a top portion of the back frame structure. According to this embodiment the left and right lateral frame structures 54 and 55 are bent inwardly to assume a horizontal position and form the connecting structure 6. Contrary to the embodiment shown in Figure 4, the entire back frame structure is not provided in a single injection or compression moulded piece. In the embodiment of Figures 6-8, each of the two longitudinal frame element 54 and 55 and part of the connection structure 6 form a single piece. The connection structure 6 comprises thus two main parts, 58 and 59, which are both extensions of the respective longitudinal frame elements 54 and 55. The main parts 58 and 59 are provided as profiles that can engage and be guided one with respect to the other. In particular, in the embodiment shown, the main parts 58 and 59 of the connecting structure are provided as tubes one of which is telescopically guided inside the other. Of course, other axial guiding mechanisms, such as a dovetail guide and so forth maybe used. This arrangement allows the distance between the left and right longitudinal frame elements to be adjusted. This is particularly advantageous, because it allows to use the same structural elements for frames of seats with different widths. In Figure 7, distance between the longitudinal frame elements 54 and 55 is extended by the distance d, if compared to the situation in Figure 6. In Figure 8, a section is cut along the connecting element 6, showing the inside configuration of the connecting structure, which also reveals in greater detail the housings 57 and 57' for harbouring the headrest carrying elements (or headrest frame structure) 61, 62.

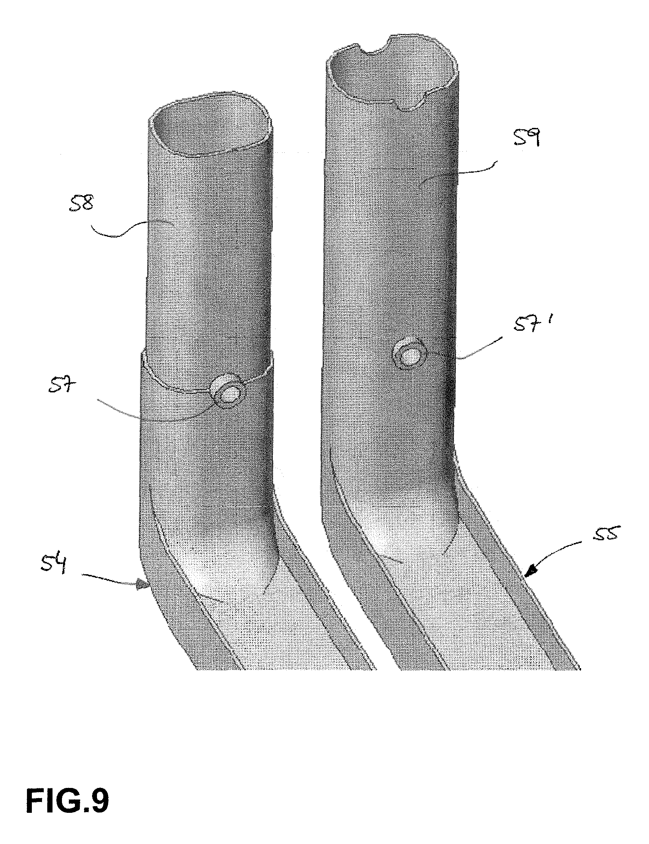

**Figure 9** shows the two separate pieces that form the left and right lateral longitudinal frame elements 54 and 55, and which are provided in one piece together with parts 58 and 59, respectively, of the top connecting structure.

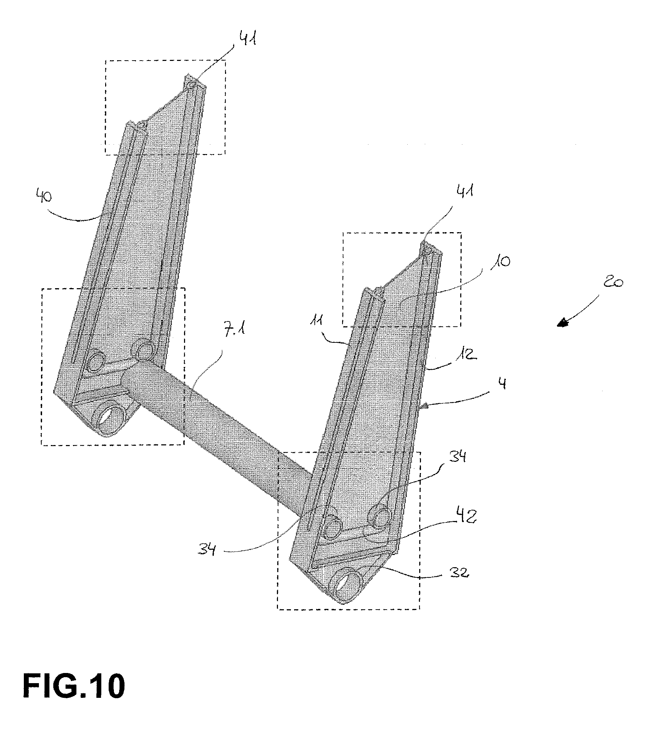

**Figure 10** shows an embodiment of a lower end of the back frame structure 20 of Figure 3, detached from other frame elements, in particular from the hinge element 13 and the seat chassis structure 21. Reinforcements 41, guided in the perpendicular angle between flat surfaces 10-12 can be seen (at the connection between a flange and the central flat structure), and reinforcements 40 applied on the free (proximal) side of flat surface 11. A similar reinforcement 40 is applied on the free distal side of the distal flat surface 12, but this cannot be seen in the view of Figure 10. Figure 10 shows reinforcements having the shape of hollow cylinders 34 and 32, which surround openings in the lateral side frame elements for attaching the hinge mechanism 13 and/or harbouring the pivoting axle for reclining the back frame structure.

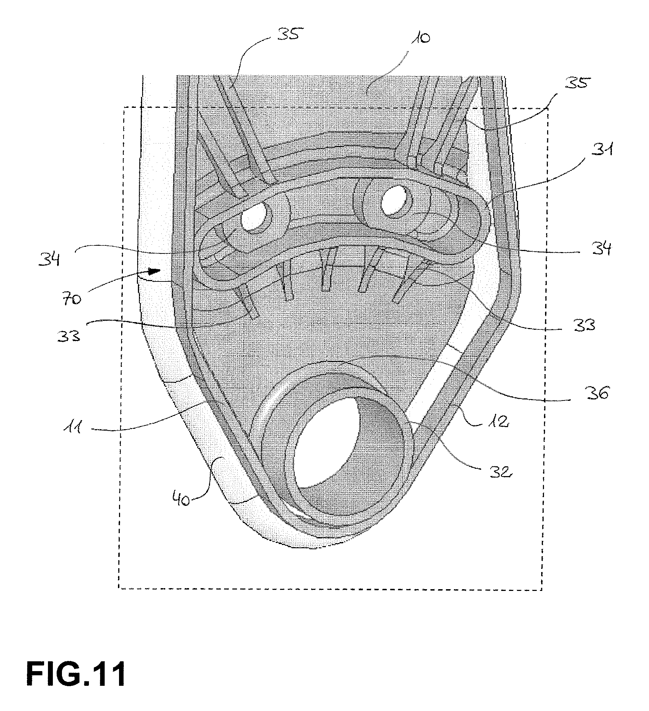

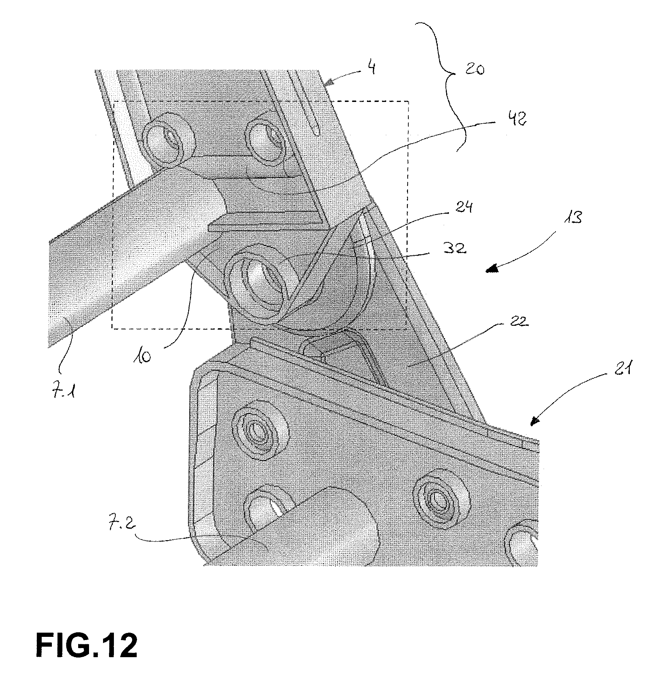

**Figure 11** is a detailed view showing an embodiment of the lower end of a lateral longitudinal frame structure. This view shows in particular the various reinforcement elements used to locally reinforce the overall frame structure in order to increase robustness of the frame structure. Reinforcement structures in the form of hollow cylinders 32, 34 reinforce the housing for the pivoting axle and of the fixing housings for attaching the hinge mechanism 13, respectively. The hollow cylinder 32 providing the housing of the pivoting axle is further stabilised by an annular structure 36. The reinforcement elements 34 for attaching the hinge carrying plate 24 (shown in Figs. 3 and 12) are surrounded by various elements 31, 33, 35, which form an overload indicator 70, besides the function of these elements as reinforcement structures.

The indication function is provided by a plurality of small supporting indicator pieces 33 and 35 and by reinforcing elements integrated inside the structure in the region at the lower, rear end of the lateral longitudinal elements. In the event that a shock event leads to a displacement of a support ring 34 at which the hinge mechanism is attached, this can be recognised by comparison of the position with respect to the indicator pieces. Similarly, an overload frame is provided by a reinforcement structure 31 surrounding the support rings 34 but leaving some space for displacement. As long as the support rings 34 stay inside the area covered by the surrounding reinforcement structure 31, the overall seat frame structure is still functional and can be used further. However, if, following an impact or another severe loading, the surrounding reinforcement structure 31 is broken or opened at some position, this indicates that the frame structure is not functional for absorbing any further load or impact any more and the seat frame structure has to be replaced.

**Figure 12** shows in greater detail the hinge mechanism 13 pivotally connecting a back frame structure and a seat chassis structure 21 on the left side of the seat frame structure in an inside-out view. A support plate 22 is rigidly attached to the rear end of the seat chassis structure 21. The lower end of the longitudinal frame element 4 can be seen, and the lower connecting element 7.1, which connects this longitudinal frame element to the right longitudinal frame element (not shown). A pivoting plate 24 is rigidly attached to the longitudinal frame element 4, and reinforcements are provided to support housings of screws or nuts of attachment. The pivoting axle extends through support plate 22, pivoting plate 24 and the central flat structure of the longitudinal frame element 4. The housing of the pivoting axle is reinforced by a hollow cylindrical border structure 32. Similar to Figure 11, the latter showing the lower end of the longitudinal frame element 4 from the other side (outside) of the seat frame structure, the view of Figure 12 shows many reinforcements, situated to absorb and/or redistribute impact loads, which are particularly high in this area of the seat frame. In case of overload, the selected composite materially and/or locally applied reinforcements avoid braking of the elements. In case of overload, deformation takes place instead of braking.

**Figure 13** shows an embodiment of a lateral frame element according to the present invention comprising a lower portion 80 and an upper portion 81. The lower portion 80 corresponds to the portion where a hinge mechanism 13 is mounted (not shown). In Figure 13, a lower transversal connecting element 7.1 is also provided in this portion. The upper portion 81 forms the main part of the longitudinal extension of the lateral longitudinal frame element and reaches to an upper transversal connecting element 6, as shown in Figure 3, for example. The particularity of the embodiment of Figure 13 is that the lower and upper portions 80 and 81, respectively, of the longitudinal frame element have different cross-sections. More particularly, the lower portion 80 has an I-shaped cross-section as described above, provided with local reinforcements as described above with respect to Figure 11, for example reinforcements 34, in order to reinforce the seat frame structure in this area where loads are particularly high in case of an impact. The upper portion of the longitudinal frame element has an U-shaped cross-section, wherein the U is oriented so that the lateral walls are oriented towards the front or towards behind. This could also be described as a C-shaped cross-section, or, in the embodiment shown in Figure 13, as an inversed C-shaped cross-section ("⊃"). Between the U-shaped cross-section and the I-shaped cross-section there is a transitional portion 82, in which the U-shaped cross-section merges to the I-shaped cross-section.

According to an embodiment, the upper portion 81 of the longitudinal frame element has a combined U and I-shaped cross section, similar to the symbol " 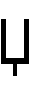 ", reminding of a wine glass. Again, the orientation of the cross-section according to this embodiment is such that the axis of symmetry of the longitudinal frame element is the front-to rear axis of the chair. In other words, the flat surfaces face the left and right sides, and said surfaces can be seen as planes that are situated perpendicularly to the left-to right axis of the chair.

**Figure 14** is a view in cross-section through the longitudinal frame element of Figure 13 within the transitional portion 82, showing at the same time the said U-shaped cross-section (towards the front) and said I-shaped cross section (towards the back).

The present invention provides light back, seat chassis and entire seat frames, particularly suitable for vehicle seats, for example car seats. The seat frames are principally made of polymers, in particular injection moulded and/or compression moulded composites. The polymers are preferably fibre-reinforced. Preferably, they contain about 30-70% fibre by weight, more preferably 40-50% fibre by weight of the polymer including the fibre. Fibre may be glass fibre and/or carbon fibre, for example. Preferably, they are short fibres, having an average length of about 2-3 mm but could include continuous fibres locally where additional reinforcement is required.

Polymers and composites useful for the purpose of the present invention include standard engineering polymers commonly used for structural plastic parts such as Polypropylene, Polyamides and Polyethylene Terephthalate. These polymers may be reinforced by fiber.

Reinforcement elements may also be polymers, in particular fibre reinforced polymers. For example, reinforcement elements may already be provided with the injection or compression moulded composite. For example, a longitudinal frame element 4 or 5 may be obtained by injection moulding including reinforcement elements 32, 34 provided for harbouring the axle or the nuts or screws for attaching to a pivoting hinge 13. The reinforcement elements may also be applied in a separate step, following the preparation of the main structure, such as the longitudinal frame element with an I-shaped cross section. In this case, also composite reinforcements but also other reinforcement materials may be used, for example metal, fabrics, and wood. In Figure 2, reinforcement elements 40 are fabrics applied to the external surfaces of the distal and proximal flat elements 11 and 12, and reinforcement element 41 is a tow of fibre reinforced polymer. EP0825922B9 discloses a processes and equipments for manufacturing polymer and composite products such as is described in the present invention and indicates how local fibre reinforcements can be incorporated in polymer parts whilst minimising the additional associated cost.

## Claims

1. A vehicle seat frame structure comprising at least two lateral, left and right longitudinal frame elements (4, 5) joined by at least one transverse connecting element (6, 7, 8), **characterized in that** said elements are made at least in part of a polymer material and **in that** said lateral longitudinal elements have a substantially I-shaped cross-section along at least a substantial part of their length.

2. The vehicle seat frame structure according to claim 1, wherein said transverse connecting element has a closed cross-section on at least part of its length.

3. The vehicle seat frame structure according to any one of the preceding claims, wherein said lateral longitudinal frame elements are disposed substantially parallel and symmetric towards a plane of symmetry and in that said I-shaped section comprises two flanges fore and aft (11, 12) oriented substantially perpendicular to said plane of symmetry.

4. The vehicle seat frame structure according to any one of the preceding claims, comprising reinforcement elements (31-36; 40-42) at selected locations of the seat frame structure to locally optimize the structural performance of the seat frame structure.

5. The vehicle seat frame structure according to any one of the preceding claims, wherein a lateral longitudinal frame element and a portion of said at least one transversal connecting element are geometrically blended together in a way to allow the part formed by said lateral longitudinal frame element and said portion of the transversal connecting element to be obtained by moulding.

6. The vehicle seat frame structure according to any one of the preceding claims, wherein said reinforcement elements comprise metal parts, plastic parts and/or fabrics, wherein said plastic parts are selected from polymer materials, composite polymer materials, fiber or tow reinforced polymer materials.

7. The vehicle seat frame structure according to the preceding claim, wherein said one or more reinforcement elements are provided on at least one of the outer side of said two flanges fore and aft (10, 11) of said left and right longitudinal frame elements and/or at the connection between said flanges and a central web connecting said flanges.

8. The seat frame structure according to any one of the preceding claims, comprising two separate pairs of lateral, left and right longitudinal frame elements (4, 5, 26, 27), wherein a first pair forms a back frame structure (20) and a second pair forms a seat chassis structure (21), and wherein said back frame structure (20) and said seat chassis structure (21) are pivotally connected with each other by a hinge mechanism (13) so as to allow for adjustment of an angle of said back frame structure (20) and said seat chassis structure (21).

9. The seat frame structure according to any one of claims 4 to 8, wherein said left and right longitudinal frame elements (4, 5, 26, 27) comprise reinforcement elements (31-35) at a location where each of said left and right longitudinal frame element is connected to said hinge mechanism (13).

10. The vehicle seat frame structure according to any one of the preceding claims, wherein a substantial part of one or more of the following:
- said one, two or more of the left and right longitudinal frame elements (4, 5, 26, 27);
- if applicable, one or more of said connecting elements (6, 7, 8, 9); and,
- if applicable, said hinge mechanism (13);
is made at least in part by injection molding and/or compression molding, from thermoplastic and/or thermosetting polymer material or from fiber reinforced polymer material.

11. The vehicle seat frame structure according to any one of the preceding claims wherein each of said two lateral left and right longitudinal frame elements are bent inwardly at their upper end to form a closed or U-shaped part (58, 59) and wherein said closed or U-shaped part of each of said left and right longitudinal frame elements are guided telescopically one within the other.

12. The seat frame structure according to any one of the preceding claims, wherein said at least two lateral, left and right longitudinal frame elements (4, 5) comprise an overload indicator (70), indicating if the seat frame structure has been overloaded.

13. The seat frame structure according to claim 23, wherein said indicator structures include one or more reinforcement elements.

14. The seat frame structure according to any one of the preceding claims comprising a substantially horizontal top connection structure (56, 57) connecting said two lateral, left and right longitudinal frame elements (4, 5, 54, 55) with each other at a top end of said lateral longitudinal frame elements, wherein said top connection structure supports and/or harbours headrest carrying elements (61, 62).

15. The seat frame structure according to any one of the preceding claims comprising a central flat structure of the longitudinal frame element (4) reinforced by a geometrical features (31-36) and/or a lower transversal frame element (7, 7.1) which are situated to support a hinge mechanism (13) against premature collapse under impact load and/or to redistribute impact loads.

16. The seat frame structure according to any one of the preceding claims wherein the seat frame structure is assembled from separate preferably telescopically connected components wherein the separation of components is arranged to increase the geometrical design freedom for the part with respect to the geometrical constraints imposed by moulding of the separate parts.
